# EUROPEAN PATENT APPLICATION

(11) **EP 4 793 190 A1**
(43) Date of publication of application: **19.08.2026**
(21) Application number: 24755962.8
(22) Date of filing: 30.01.2024
(51) Int. Cl.: B65D 19/44, H01M 8/24, H01M 8/2404

(54) **FLEXIBLE SUPPORT TRAY FOR ASSEMBLING AND TRANSPORTING STACKED FLAT COMPONENTS OF ELECTRICAL DEVICE**

(30) Priority: 15.02.2023 CN 202310122849
(71) Applicant: Comau (Shanghai) Engineering Co., Ltd., Shanghai 201913 (CN)
(72) Inventor: ZHANG, Bin, Shanghai 201913 (CN)
(74) Representative: Buzzi, Notaro & Antonielli d'Oulx S.p.A.
(86) International application number: PCT/CN2024/074642
(87) International publication number: WO 2024/169588

(57) **Abstract**

The present invention relates to a supporting tray for assembling and transporting flat component stacks of an electrical device (such as a component or a battery unit of a hydrogen cell and an electrolytic bath), in particular to a flexible transferring tray used in a production process of hydrogen energy fuel cells. The tray is characterized by including a main baseplate mechanism and a main frame mechanism which are mounted into a whole. A replaceable bottom quick-changing supporting mechanism is arranged on the main baseplate mechanism, two replaceable orientation guiding mechanisms are arranged at a top of the main baseplate mechanism, and the two orientation guiding mechanisms are symmetric left and right at the top of the main baseplate mechanism. By using the tray provided by the present invention, the manual operation intensity and using cost can be reduced, the production efficiency is optimized, and the tray is compatible with multiple products. The tray disclosed in the present invention is suitable for a general product production line, especially for an automotive hydrogen energy fuel cell production line.

## Description

### Technical Field

The present invention relates to a flexible supporting tray for assembling and transporting flat component stacks of an electrical device (such as a component or a battery unit of a hydrogen cell and an electrolytic bath).

### Background

In an implementation of a hydrogen energy fuel cell production line, a main assembling process of hydrogen energy fuel cells is a stacking process for alternately stacking membrane electrode plates and bipolar plates, and a press fitting process of stacked layers after completing stacking. However, semi-finished hydrogen fuel cells only completing stacking have special difficulties in transferring between a stacking device and a press fitting device. For the semi-finished hydrogen fuel cells only completing stacking, stacked layers of products are much higher than a shell, and the stacked layers are thousands of layers of stacked sheets, which are extremely prone to sliding. The assembling process of the products requires the stacked sheets to be precise in position, so the stacked layers are not allowed to displace and slosh. The press fitting process is to apply pressure to the stacked layers, thicknesses of the stacked layers are compressed by about one-fifth of the thicknesses under the action of the pressure, and finally the stacked layers completely achieve in the shell. Since the bipolar plates may have small or even larger deviations from the membrane electrode plates, it may be prone to deviations relative to a proper position of each plate within stacking. If the stacking deviation is excessive, risks such as hydrogen leakage and product scrap are prone to being caused. Therefore, the stacking device needs to have a precise stacking function.

### Summary

One objective of the present invention is to provide a supporting tray, for assembling and transporting flat component stacks of an electrical device (such as a component or a battery unit of a hydrogen cell and an electrolytic bath), which effectively solves all problems in the background art.

Another objective of the present invention is to provide a supporting tray of the above type, which can effectively execute a stacking operation, and meanwhile, ensure that workpieces are correctly guided to correct positions in stacks.

Another objective of the present invention is to provide a supporting tray, and the supporting tray can easily and quickly clamp product shells in the supporting tray.

Another objective of the present invention is to provide a supporting tray of the above type, which can easily adapt to different types and sizes of products and different heights of product shells.

Another objective of the present invention is to provide a supporting tray of the above type, and the supporting tray can ensure that stable positions of stacked sheets can be ensured in a transporting process of semi-finished products only completing stacking in a period of transferring from a stacking station to a press machine station.

In order to achieve the above one or more objectives, a technical solution of the present invention is to provide a flexible supporting tray for assembling and transporting flat component stacks of an electrical device, which is characterized by including a main baseplate mechanism, a main frame mechanism, a bottom quick-changing supporting mechanism and two orientation guiding mechanisms;
the two orientation guiding mechanisms are symmetric left and right at a top of the main frame mechanism, wherein
each orientation guiding mechanism can be adjusted outwards and inwards, after being adjusted outwards, each orientation guiding mechanism can place fuel cell shells into the main frame mechanism; and after being adjusted inwards, each orientation guiding mechanism can fit the hydrogen energy fuel cell shells, play an orientation function of guiding stacked sheets to be placed into the fuel cell shells, and ensure that stacked layers cannot displace and slosh;
the main baseplate mechanism and the main frame mechanism are mounted into a whole; and
the replaceable bottom quick-changing supporting mechanism is arranged on the main baseplate mechanism.

Preferably, the main baseplate mechanism includes an aluminum plate, and four corners of the aluminum plate are respectively provided with guide wheel mechanisms cooperating with a roller bed; and a part, in contact with the roller bed, under an edge of the aluminum plate, is provided with a high-hardness wear-resisting steel bar.

Preferably, a polyurethane anti-collision damping block, a steel collision-resisting block and a signboard and arrow indication direction are arranged on the aluminum plate, wherein the polyurethane anti-collision damping block is used for absorbing vibration generated during collision and impacting of two flexible transferring trays; the steel collision-resisting block is used for absorbing impacting of an external pneumatic stopper plug on the flexible transferring trays; and the signboard and arrow indication direction is used for identifying directions and varieties of the flexible transferring trays.

Preferably, the aluminum plate is provided with lifting positioning holes for precisely positioning the flexible transferring trays.

Preferably, the top of the main frame mechanism is provided with quick hoisting rings and elbow clamps, wherein the quick hoisting rings are located at four corners of the top of the main frame mechanism; and the two elbow clamps are respectively located on left and right sides of the top of the main frame mechanism, mutually staggered in position, and used for fixing the hydrogen fuel cell shells into the main frame mechanism.

Preferably, the two orientation guiding mechanisms are the same in structure, and are arranged at the top of the main frame mechanism through a horizontal guide rail and a vertical guide rail, the orientation guiding mechanisms are adjusted outwards and inwards after being adjusted in positions along the horizontal guide rail, and the orientation guiding mechanisms fit the hydrogen energy fuel cell shells after being adjusted in positions along the vertical guide rail.

Preferably, a front side and a rear side of each orientation guiding mechanism are respectively provided with a fixed guide bar with a fixed position and a sliding guide bar that can move up and down in position, the sliding guide bars are located above the fixed guide bars, and the fixed guide bars and the sliding guide bars on the orientation guiding mechanisms on the left and right sides are oppositely arranged, and symmetrically mounted, thereby forming a complete orientation to the stacked sheets; and
the sliding guide bars slide in guide slots up and down, the guide slots are located in the orientation guiding mechanisms, and the guide slots are internally provided with springs; in an initial state, the sliding guide bars retain at most tops of the guide slots under the action of the springs; when a press fitting device press-fits the stacked sheets, ambient pressure acting on the sliding guide bars is generated, the ambient pressure overcomes elastic force of the springs, and the sliding guide bars operate downwards to most bottoms of the guide slots; and after the ambient pressure acting on the sliding guide bars is eliminated, the sliding guide bars automatically restore to the initial state under the action of restoring force of the springs.

Preferably, the fixed guide bar and the sliding guide bar on the front side and the rear side of the same orientation guiding mechanism adopt asymmetric design.

Preferably, bottoms of the fixed guide bars and the sliding guide bars are 45-degree inclined guide rails, and when the orientation guiding mechanisms are manually operated to be placed onto the hydrogen fuel cell shells along the vertical guide rail, the orientation guiding mechanisms fit 45-degree bevels of the hydrogen fuel cell shells through the 45-degree inclined guide rails, so that positions of the orientation guiding mechanisms on the horizontal guide rails are limited.

Preferably, the bottom quick-changing supporting mechanism includes a body, the body is provided with three steel middle positioning pin bushes, and upper and lower ends of the positioning pin bushes respectively protrude out of upper and lower end faces of the body; in the three positioning pin bushes, the positioning pin bush located in a middle provides a through hole, and a rhombic pin and a circular pin are arranged at upper ends of the two positioning pin bushes on a front side and a rear side respectively; guide blocks are respectively arranged on end parts of the front end and the rear end of the body, and the guide blocks are shaped like a handle; and two horizontally-placed supporting blocks are arranged on the lower end face of the body, a horizontally-placed supporting block is arranged between the two adjacent positioning pin bushes, and the horizontally-placed supporting block is higher than the lower end parts of the positioning pin bushes.

By using the tray provided by the present invention, the manual operation intensity and using cost can be reduced, the production efficiency is optimized, and the tray is compatible with multiple products. The tray disclosed in the present invention is suitable for a general product production line, especially for an automotive hydrogen energy fuel cell production line.

Compared with the prior art, the present invention has the following advantages:
The hydrogen energy fuel cell products are clamped quickly and conveniently on the tray provided by the present invention, and fixed stably and reliably. The tray provided by the present invention is convenient to operate, and in a process of the tray transporting semi-finished hydrogen energy fuel cells only completing stacking, the products are supported stably and reliably. In a process of press-fitting the semi-finished hydrogen fuel cells completing stacking, the tray guiding mechanisms can automatically adjust heights with a press fitting process, and the tray is compatible with other hydrogen fuel cell products with different height sizes.

### Brief Description of the Drawings

Fig. 1 is a three-dimensional schematic diagram of an overall structure of a tray;
Fig. 2 is a three-dimensional schematic diagram of an overall structure of a tray with stacked workpieces;
Fig. 3 is an enlarged view of an orientation guiding mechanism of a tray not with workpieces;
Fig. 4 is an enlarged view of an orientation guiding mechanism of a tray with workpiece shells;
Fig. 5 is an enlarged view of a bottom quick-changing supporting mechanism;
Fig. 6 is a three-dimensional schematic diagram of an overall structure of a tray with press-fit workpieces; and
Fig. 7 is a three-dimensional schematic diagram of an overall structure of a tray compatible with other types of workpieces.

### Detailed Description

The specific embodiments shown herein as examples have been developed for use in conjunction with a stacking device that forms a subject of a common pending application for the same applicant. In order to make the present invention more obvious and easier to understand, the present invention is further explained in conjunction with the specific embodiments. It should be understood that these embodiments are only intended to explain the present invention and are not used for limiting the scope of the present invention. In addition, it should be understood that after reading contents taught in the present invention, those skilled in the art can make various modifications or changes to the present invention, and these equivalent forms also fall within the limited scope of claims attached to the present application.

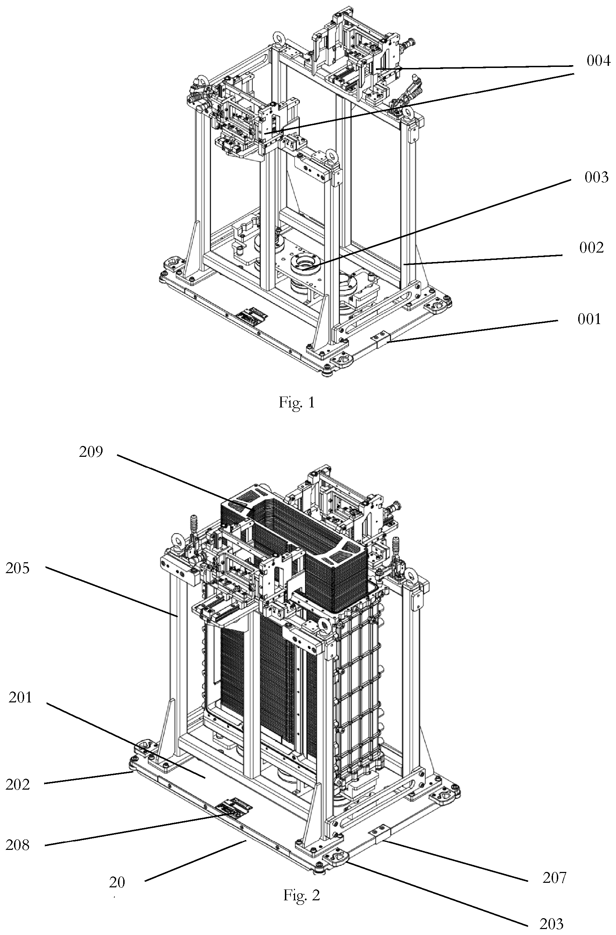

As shown in Fig. 1, a flexible transporting tray used in a process of producing hydrogen energy fuel cells disclosed in an embodiment includes a main baseplate mechanism 001, a main frame mechanism 002, a bottom quick-changing supporting mechanism 003, and two orientation guiding mechanisms 004. The main baseplate mechanism 001 and the main frame mechanism 002 are mounted into a whole, and are of a basic main structure. The bottom quick-changing supporting mechanism 003 used for supporting hydrogen fuel cell products is mounted on the main baseplate mechanism 001. The two orientation guiding mechanisms 004 are mounted at a top of the main frame mechanism 002, and can be adjusted outwards and inwards; and after being adjusted outwards, the orientation guiding mechanisms 004 can quickly place fuel cell shells into the main frame mechanism 002, then after being adjusted inwards, the orientation guiding mechanisms 004 can fit the hydrogen energy fuel cell shells to play a role in guiding stacked sheets to be placed in the fuel cell shells, and ensure that the stacked sheets cannot displace and slosh. The bottom quick-changing supporting mechanism 003 and the orientation guiding mechanisms 004 can be matched according to different heights of the hydrogen fuel cell products, can be quickly replaced without a tool, meet multiple types of quick changing, increase the flexible compatibility capacity of the tray, and achieve flexible compatibility of the hydrogen fuel cell products with different heights.

As shown in Fig. 2, a body of the main baseplate mechanism 001 is an aluminum plate 201, which meets requirements of high strength and light weight. The aluminum plate 201 is provided with lifting positioning holes, which are used for precisely positioning the tray provided by the present invention. Guide wheel mechanisms 202 are respectively mounted at four corner parts of the aluminum plate 201, so that the tray provided by the present invention operates more smoothly on a roller bed. A polyurethane anti-collision damping block 203, a steel collision-resisting block 207 and a signboard and arrow indication direction 208 are further mounted on the aluminum plate 201. When two trays disclosed in the present invention collide with each other, the polyurethane anti-collision damping block 203 can absorb vibration generated during collision and impacting. When the trays disclosed in the present invention are used in cooperation with an external pneumatic stopper plug, a service life of the trays may be prolonged through the steel collision-resisting block 207. Through the signboard and arrow indication direction 208, personnel can conveniently and quickly identify directions and varieties of the trays disclosed in the present invention. A part, in contact with the roller bed, under an edge of the aluminum plate 201 is provided with a high-hardness wear-resisting steel bar 204 used for prolonging the service life of the trays disclosed in the present invention.

The main frame mechanism 002 includes a main square steel weld holder 205, which uses rolled steel for welding, and ensures the strength of the trays. Four quick hoisting rings 206 are arranged at a top of the main square steel weld holder 205, which are convenient for transferring of the trays disclosed in the present invention and tray loading and unloading. In the present embodiment, the main square steel weld holder 205 adopts common rolled steel for welding, and the strength is high and the cost is low. Strength is improved by fixing upper and lower parts of a right side of the main square steel weld holder 205, on a left side, only a lower part is connected and fixed, and an upper part is open, which reserves a gripper operation space for a robot automatically carrying hydrogen fuel cells. Two elbow clamps 303 are mounted above the main square steel weld holder 205, which can quickly fix the hydrogen fuel cell shells.

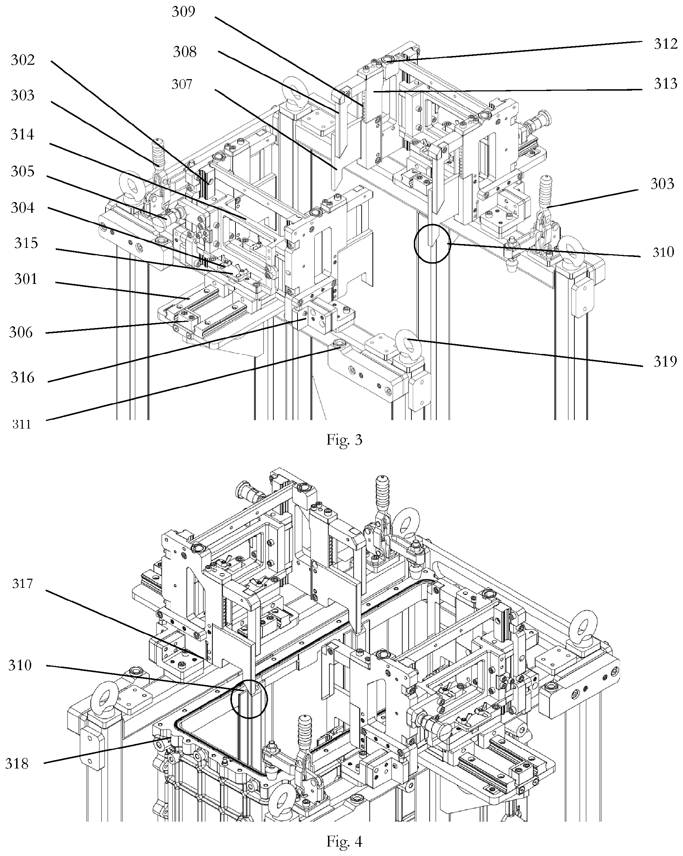

As shown in Fig. 3 and Fig. 4, the orientation guiding mechanisms 004 are fixed to the top of the main frame mechanism 002 through a horizontal guide rail 301 and a vertical guide rail 302, and they can be integrally adjusted in positions along the horizontal guide rail 301 and the vertical guide rail 302. The orientation guiding mechanisms 004 can be slidably adjusted inwards and outwards and slidably adjusted up and down on the main frame mechanism 002 through the horizontal guide rail 301 and the vertical guide rail 302, on the one hand, cell products can be conveniently and quickly loaded and unloaded, and on the other hand, the orientation guiding mechanisms can be compatible with multiple specifications of cell products, and adjustment is convenient. Before loading of the hydrogen fuel cell shells, the orientation guiding mechanisms 004 need to be moved outwards along the horizontal guide rail 301 to a horizontal limit 306 on an end part of the guide rail, and at the moment, spring pins will be clamped to a V-shaped slot 317, preventing the tray orientation guiding mechanisms sloshing along the guide rail 301; and at the moment, the hydrogen fuel cell shells can be loaded into the tray. After loading of the shells, the elbow clamps 303 may be manually operated to quickly compress the fuel cell shells. After spring insert-pull pins 305 are unlocked, a handle 314 may be grasped to place the orientation guiding mechanisms 004 onto the hydrogen fuel cell shells along the vertical guide rail 302, then the spring insert-pull pins 305 are manually inserted, and the moment, positions of the orientation guiding mechanisms 004 on the vertical guide rail 302 may be completely locked. The spring insert-pull pins 305 are used for quickly locking or unlocking positioning points, and quick and accurate positioning requirements may be met.

After the orientation guiding mechanisms 004 are placed onto the fuel cell shells, the orientation guiding mechanisms 004 fit 45-degree bevels on the products through 45-degree inclined guide rails 310, so that positions of the orientation guiding mechanisms 004 on the horizontal guide rail 301 are completely limited. When the tray is matched with an external device, a position of the tray is precisely fixed through second positioning pin holes 312 in top faces of the orientation guiding mechanisms 004 and first positioning pin holes 311 fixed to the top of the main frame mechanism 002. A fixed guide bar 307 with a fixed position and a sliding guide bar 308 that can move up and down in position are respectively arranged on a front side and a rear side of each orientation guiding mechanism 004, the sliding guide bars 308 are located above the fixed guide bars 307, and the fixed guide bars 307 and the sliding guide bars 308 on the front side and the rear side adopt asymmetric design. The fixed guide bars 307 and the sliding guide bars 308 on the orientation guiding mechanisms 004 on the left and right sides are oppositely arranged and symmetrically mounted, so as to form a complete orientation to the stacked sheets. In the present embodiment, bottoms of the fixed guide bars 307 and the sliding guide bars 308 are the 45-degree inclined guide rails 310, and through a mode that a 45-degree orientation abutting is adopted at a contact end of the guide bars abutting the cell shells, abutting is smoother. The sliding guide bars 308 slide in guide slots 313 up and down, and the guide slots 313 are located in the orientation guiding mechanisms 004. Springs 309 are completely limited in the guide slots 313, and have the maximum limit upwards and downwards. Under normal circumstances, the sliding guide bars 308 are retained above under the action of the springs 309, however, when a press fitting device press-fits on the stacked sheets, a pressure generated by the press fitting device acts on the sliding guide bars 308, the pressure overcomes elastic force of the springs 309, and the sliding guide bars 308 operate downwards to bottoms of the guide slots 313. After the ambient pressure acting on the sliding guide bars 308 is eliminated, the sliding guide bars 308 automatically restore to most tops of the guide slots 313 under the action of the restoring force of the springs 309.

In the present embodiment, the orientation guiding mechanisms 004 can be integrally and quickly changed, and butterfly bolts are used, so that operating personnel can change other types of accessories without a tool.

As shown in Fig. 4, the bottom quick-changing supporting mechanism 003 includes a body, the body is provided with three steel middle positioning pin bushes 405, and positioning is convenient, correct and quick during quick-changing. Upper end lower ends of the positioning pin bushes 405 respectively protrude out of upper and lower end faces of the body. In the three positioning pin bushes 405, the positioning pin bush 405 located in a middle provides a through hole, and a rhombic pin 401 and a circular pin 402 are fixed at upper ends of the two positioning pin bushes 405 on a front side and a rear side respectively, and the two are matched to completely position the products. Guide blocks 403 are respectively arranged on end parts of a front end and a rear end of the body, and the guide blocks 403 are shaped like a handle, not only can fix side faces of the products, but also can be used as a handle, and manual carrying is convenient. Two horizontally-placed supporting blocks 404 are arranged on the lower end face of the body, a horizontally-placed supporting block 404 is arranged between the two adjacent positioning pin bushes 405, and the horizontally-placed supporting block 404 is higher than the lower end parts of the positioning pin bushes 405. When the bottom quick-changing supporting mechanism 003 is manually carried, the horizontally-placed supporting blocks 404 can protect the positioning pin bushes 405 against impact, and can also ensure that the bottom quick-changing supporting mechanism 003 can be stably placed during disassembling and changing. When dealing with different types, bottom quick-changing supporting mechanisms with different heights can be changed integrally. By changing heights of two parts of the positioning pin bushes 405 and the horizontally-placed supporting blocks 404, a quick-changing supporting mechanism for supporting the hydrogen fuel cell products with other height types can be made.

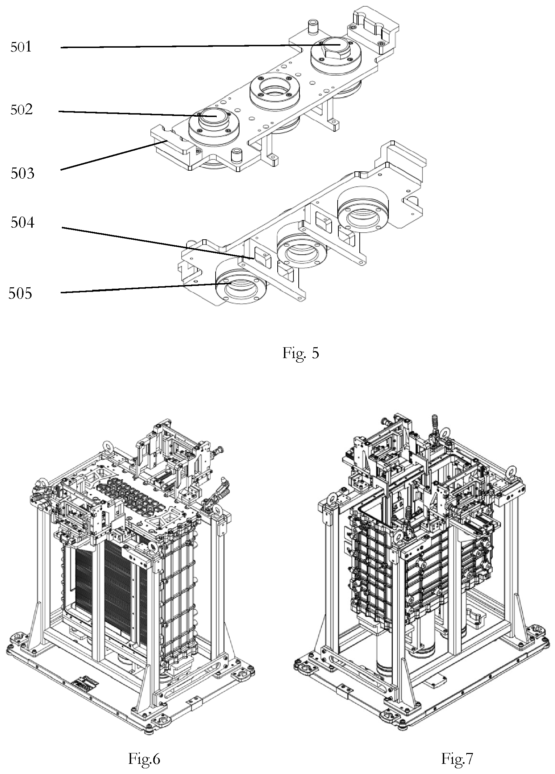

Fig. 6 is a three-dimensional schematic diagram of a tray with press-fit workpieces. At the moment, the orientation guiding mechanisms are moved outwards, the elbow clamps are opened, the workpieces are press-fit, covered and mounted, the fuel cells can be manually carried from the tray, or the fuel cells can be carried out of a frame opening by a robot.

Fig. 7 is a three-dimensional schematic diagram of an overall structure of a tray compatible with other types of workpieces. As shown in the figure, a height of a new workpiece is lower than that of a master type workpiece, and the tray can be quickly compatible with other types of workpieces only by changing the bottom quick-changing supporting mechanism.

## Claims

1. A flexible supporting tray for assembling and transporting flat component stacks of an electrical device, **characterized by** comprising a main baseplate mechanism and a main frame mechanism which are mounted into a whole, a replaceable bottom quick-changing supporting mechanism being arranged on the main baseplate mechanism, two replaceable orientation guiding mechanisms being arranged at a top of the main frame mechanism, and the two orientation guiding mechanisms being symmetric left and right at the top of the main frame mechanism, wherein
each orientation guiding mechanism can be adjusted outwards and inwards, after being adjusted outwards, each orientation guiding mechanism can place fuel cell shells into the main frame mechanism; and after being adjusted inwards, each orientation guiding mechanism can fit the hydrogen energy fuel cell shells, play an orientation function of guiding stacked sheets to be placed into the fuel cell shells, and ensure that stacked layers cannot displace and slosh.

2. The flexible supporting tray for assembling and transporting the flat component stacks of the electrical device according to claim 1, **characterized in that** the main baseplate mechanism comprises an aluminum plate, and four corners of the aluminum plate are respectively provided with guide wheel mechanisms cooperating with a roller bed; and a part, in contact with the roller bed, under an edge of the aluminum plate is provided with a high-hardness wear-resisting steel bar.

3. The flexible supporting tray for assembling and transporting the flat component stacks of the electrical device according to claim 2, **characterized in that** a polyurethane anti-collision damping block, a steel collision-resisting block and a signboard and arrow indication direction are arranged on the aluminum plate, wherein the polyurethane anti-collision damping block is used for absorbing vibration generated during collision and impacting of two flexible transferring trays; the steel collision-resisting block is used for absorbing impacting of an external pneumatic stopper plug on the flexible transferring trays; and the signboard and arrow indication direction is used for identifying directions and varieties of the flexible transferring trays.

4. The flexible supporting tray for assembling and transporting the flat component stacks of the electrical device according to claim 2, **characterized in that** the aluminum plate is provided with lifting positioning holes for precisely positioning the flexible transferring trays.

5. The flexible supporting tray for assembling and transporting the flat component stacks of the electrical device according to claim 1, **characterized in that** the top of the main frame mechanism is provided with quick hoisting rings and elbow clamps, wherein the quick hoisting rings are located at four corners of the top of the main frame mechanism; and the two elbow clamps are respectively located on left and right sides of the top of the main frame mechanism, mutually staggered in position, and used for fixing the hydrogen fuel cell shells into the main frame mechanism.

6. The flexible supporting tray for assembling and transporting the flat component stacks of the electrical device according to claim 1, **characterized in that** the two orientation guiding mechanisms are the same in structure, and are arranged at the top of the main frame mechanism through a horizontal guide rail and a vertical guide rail, the orientation guiding mechanisms are adjusted outwards and inwards after being adjusted in positions along the horizontal guide rail, and the orientation guiding mechanisms fit the hydrogen energy fuel cell shells after being adjusted in positions along the vertical guide rail.

7. The flexible supporting tray for assembling and transporting the flat component stacks of the electrical device according to claim 6, **characterized in that** a front side and a rear side of each orientation guiding mechanism are respectively provided with a fixed guide bar with a fixed position and a sliding guide bar that can move up and down in position, and the sliding guide bars are located above the fixed guide bars, the fixed guide bars and the sliding guide bars on the orientation guiding mechanisms on the left and right sides are oppositely arranged, and symmetrically mounted, thereby forming a complete orientation to the stacked sheets; and
the sliding guide bars slide in guide slots up and down, the guide slots are located in the orientation guiding mechanisms, and the guide slots are internally provided with springs; in an initial state, the sliding guide bars retain at most tops of the guide slots under the action of the springs; when a press fitting device press-fits the stacked sheets, ambient pressure acting on the sliding guide bars is generated, the ambient pressure overcomes elastic force of the springs, and the sliding guide bars operate downwards to most bottoms of the guide slots; and after the ambient pressure acting on the sliding guide bars is eliminated, the sliding guide bars automatically restore to the initial state under the action of restoring force of the springs.

8. The flexible supporting tray for assembling and transporting the flat component stacks of the electrical device according to claim 7, **characterized in that** the fixed guide bar and the sliding guide bar on the front side and the rear side of the same orientation guiding mechanism adopt asymmetric design.

9. The flexible supporting tray for assembling and transporting the flat component stacks of the electrical device according to claim 7, **characterized in that** bottoms of the fixed guide bars and the sliding guide bars are 45-degree inclined guide rails, when the orientation guiding mechanisms are manually operated to be placed onto the hydrogen fuel cell shells along the vertical guide rail, the orientation guiding mechanisms fit 45-degree bevels of the hydrogen fuel cell shells through the 45-degree inclined guide rails, so that positions of the orientation guiding mechanisms on the horizontal guide rail are limited.

10. The flexible supporting tray for assembling and transporting the flat component stacks of the electrical device according to claim 1, **characterized in that** the bottom quick-changing supporting mechanism includes a body, the body is provided with three steel middle positioning pin bushes, and upper and lower ends of the positioning pin bushes respectively protrude out of upper end lower end faces of the body; in the three positioning pin bushes, the positioning pin bush located in a middle provides a through hole, and a rhombic pin and a circular pin are arranged at upper ends of the two positioning pin bushes on a front side and a rear side respectively; guide blocks are respectively arranged on end parts of a front end and a rear end of the body, and the guide blocks are shaped like a handle; and two horizontally-placed supporting blocks are arranged on the lower end face of the body, a horizontally-placed supporting block is arranged between the two adjacent positioning pin bushes, and the horizontally-placed supporting block is higher than the lower end parts of the positioning pin bushes.
